# EUROPÄISCHE PATENTANMELDUNG

(11) **EP 0 803 670 A2**
(43) Veröffentlichungstag der Anmeldung: **29.10.1997**
(21) Anmeldenummer: 97105197.4
(22) Anmeldetag: 27.03.1997
(51) Int. Cl.: F16K 23/00

(54) **Zeitverzögert ansprechendes Rückschlag-Drosselventil und damit ausgestattete Flüssigkeitsprühanlage**

(30) Priorität: 25.04.1996 DE 19616537
(71) Anmelder: MH-Technik GmbH, 86863 Langenneufnach (DE)
(72) Erfinder: Habla, Gerhard, 86863 Langenneufnach (DE)
(74) Vertreter: Gallo, Wolfgang, Dipl.-Ing. (FH)

(57) **Zusammenfassung**

Ein zeitverzögert ansprechendes Rückschlag-Drosselventil ist in einem Gehäuse (1) mit einer im Durchmesser abgestuften Bohrung (11) durch ein in den im Durchmesser größeren Abschnitt der Bohrung eingebautes festes Ventilelement (3) und ein damit zusammenwirkendes bewegliches Ventilelement (2) in Form eines im Durchmesser abgestuften Differentialkolbens gebildet, der in der Stufenbohrung um eine gewisse Axialdistanz verschiebbar ist und in seiner vom festen Ventilelement (3) entfernten Position zwischen sich und diesem einen größeren Strömungsdurchlaß und in seiner am festen Ventilelement anstoßenden Axialposition zwischen sich und diesem einen kleineren, gedrosselten Strömungsdurchlaß begrenzt. Dabei ist der Strömungsdurchlaß (24) als Ringspalt (24) zwischen einem am festen Ventilelement angeordneten, vorzugsweise axial einstellbaren und zum Differentialkolben vorspringenden Kegelkörper (35) und einem komplementär kegeligen Bohrungsabschnitt des Differentialkolbens gebildet. In einer Flüssigkeitssprühanlage ist ein solches Rückschlag-Drosselventil in diejenige Pneumatikleitung des zum Antrieb einer Flüssigkeitsdosierpumpe dienenden doppeltwirkenden Pneumatikkolbens geschaltet, die der Beaufschlagung zur Erzeugung eines Flüssigkeitsausstoßhubs dient.

## Beschreibung

Bei bekannten Rückschlag-Drosselventilen handelt es sich um Rückschlagventile, die, vereinfacht ausgedrückt, in der Rückschlagposition nicht dicht schließen wie ein normales Rückschlagventil, sondern noch einen Restquerschnitt offen lassen, damit eine Rückströmung nicht vollständig gesperrt, sondern lediglich in einem konstruktiv vorgegebenen Maße gedrosselt wird. Solche bekannten Rückschlag-Drosselventile, beispielsweise in Form von Membranventilen, sind nach den üblichen Bauprinzipen von Rückschlagventilen aufgebaut. Ihr im Strömungsweg angeordnetes bewegliches Ventilorgan spricht daher bei einer Strömungsrichtungsumkehr des strömenden Mediums augenblicklich an und schaltet in die Schließ- bzw. Drosselposition um.

Ein Beispiel eines Anwendungsfalls eines Rückschlag-Drosselventils ist bei einer pneumatisch betätigten Flüssigkeitsdosierpumpe gegeben, die als Kolbenpumpe mit abwechselnden Saug- und Ausstoßhüben arbeitet und zu einem Flüssigkeitssprüh- oder Zerstäuberkopf fördert, wo eine dosierte Flüssigkeitsmenge fein verteilt auf einem Gegenstand aufgesprüht wird. Dies ist beispielsweise in Druckmaschinen beim Offsetdruck der Fall, wo ein zum Offsetdruck verwendetes Gummituch in einer Gummituch-Waschanlage mit einem Reinigungsmittel besprüht wird.

Die pneumatisch betätigte Flüssigkeitsdosierpumpe weist einen Pumpenkolben und zu dessen Antrieb einen damit in Tandemanordnung angeordneten doppeltwirkenden Pneumatikkolben zum Vorschieben (Ausstoßhub) bzw. Rückholen (Ansaughub) des Pumpenkolbens auf. Beim Ausstoßhub der Flüssigkeitsdosierpumpe zu Aufsprühen der Flüssigkeit ist die volle Kraft auf den Pumpenkolben erforderlich, weshalb die Druckluft zur Beaufschlagung dem Pneumatikkolbens ungedrosselt einströmen soll. Der Rückholhub des Pumpenkolbens, also der Ansaughub der Dosierpumpe, soll aber gebremst erfolgen, damit nicht durch zu heftiges Zurückziehen des Pumpenkolbens Kavitationsprobleme entstehen, wenn die Flüssigkeit nicht schnell genug nachströmen kann. Deshalb ist in die Druckluftleitung zu der beim Ausstoßhub des Pumpenkolbens beaufschlagten Seite des Pneumatikkolbens ein Rückschlag-Drosselventil eingebaut, das die Druckluft ungedrosselt einströmen läßt, aber, wenn diese Luft bei der umgekehrten Beaufschlagung des Pneumatikkolbens zum Rückholhub des Pumpenkolbens wieder aus dem entsprechenden Teil des Pneumatikzylinders ausgeschoben werden muß, in seine Drosselstellung umschallet und dadurch den Rückholhub des Kolbens bremst.

Nun stellt sich aber das Problem, daß beim Aufhören des Ausstoßhubs der Dossierpumpe die Düsen der Sprüheinrichtung, die ebenso wie die Leitung von der Dosierpumpe zur Sprüheinrichtung mit nun druckloser Flüssigkeit gefüllt sind, zur Tropfenbildung an den Sprühdüsen und zum Nachtropfen neigen, was sehr unerwünscht ist, weil solche Tropfen auf dem Gummituch den nachfolgenden Druckvorgang beeinträchtigen.

Das Problem des Nachtropfens in Sprühanlagen ist nicht neu. Aus der DE-OS 43 34 082 ist ein Ein/Aus-Ventil zum Öffnen bzw. Absperren der Farbzufuhr zu Sprühdüsen bekannt, das konstruktiv so gestaltet ist, daß beim Schließen den Ventils vor Erreichen der vollständig geschlossenen Stellung der sich in die Schließstellung zurückbewegende Ventilkolben etwas Farbflüssigkeit aus der Förderleitung zurücksaugt. Das Rücksaugen eines kleinen Teils der Flüssigkeit in der Zuleitung zu einer Düse beim Abschalten der Strömung mittels einer Ventilanordnung ist auch in der JP 4-316 775 (Patents Abstracts of Japan) beschrieben.

Aus der JP 6-27 81 (A) (Patents Abstract of Japan) ist zu einem ähnlichen Zweck in einen Sprühkopf für ein hochviskoses Medium ein zur Durchflußdosierung dienendes Nadelventil eingebaut, wobei der Ventilsitz des Nadelventils als Stufenkolben ausgebildet ist, der bei strömendem Medium über seine von diesem beaufschlagte rückwärtige größere Kolbenfläche in eine vordere Stellung gedrückt wird, und beim Absperren des Mediums und Wegfall von dessen Strömungsdruck mittels eines auf eine vordere Ringfläche des Kolbens wirkenden Druckspeicher in eine rückwärtige Stellung verschoben wird, um ein Rücksaugen von Medium aus dem Düsenkanal zu bewirken, damit dieses nicht aus der Düse ausfließt.

Der Erfindung liegt die Aufgabe zugrunde, eine besonders im Hinblick auf den beschriebenen Anwendungsfall einer pneumatisch betätigten Flüssigkeitsdosierpumpe zugeschnittene Maßnahme zur Nachtropfverhinderung bei von der Dosierpumpe gespeisten Sprühdüsen zu schaffen.

Zur Lösung dieser Aufgabe beinhaltet die Erfindung ein zeitverzögert ansprechendes Rückschlag-Drosselventil, wie es im Anspruch 1 angegeben und in den Unteransprüchen weiter ausgestaltet ist.

Dieses zeitverzögert ansprechende Rückschlag-Drosselventil kann in die Pneumatikzuleitung zu der dem Ausstoßhub der Dosierpumpe zugeordneten Seite des Pneumatikkolbens eingebaut werden. Bei der Umsteuerung des Pneumatikkolbens von Ausstoßhub auf Rückholhub des Pumpenkolbens läßt das Rückschlag-Drosselventil, weil es nur zeitverzögert anspricht, während einer Anfangsphase der Kolbenrückbewegung die aus dem Pneumatikzylinder verdrängte Druckluft zunächst ungedrosselt ausströmen, so daß der Pumpenkolben während dieser Anfangsphase des Rückholhubs auch relativ schnell bewegt wird. Dadurch erFolgt Für einen Moment ein augenblickliches und schnelles Rücksaugen von Flüssigkeit aus der Ausstoßleitung zur Sprüheinrichtung und damit aus den Sprühdüsen in die Dosierpumpe, bis das Rückschlagventil in der Ausstoßleitung anspricht. Dadurch wird die Flüssigkeit im Mündungsbereich der Sprühdüsen etwas zurückgenommen und dadurch eine Tropfenbildung und das unerwünschte Nachtropfen mit den damit verbundenen Problemen vermieden.

Es versteht sich von selbst, daß das erfindungsgemäße, zeitverzögert ansprechende Rückschlag-Drosselventil nicht nur bei dem eben aufgezeigten Anwendungsbeispiel eingesetzt werden kann, sondern auch in anderen Fällen, in denen ähnliche Probleme auftauchen.

Das zeitverzögerte Ansprechverhalten des erfindungsgemäßen Rückschlag-Drosselventils beruht auf der Ausbildung von dessen beweglichem Ventilkörper als axial verschiebbaren Differentialkolben.

Es versteht sich von selbst, daß das erfindungsgemäße Rückschlag-Drosselventil mit zeitverzögertem Ansprechverhalten sowohl in Pneumatikleitungen wie auch in Flüssigkeitsleitungen Anwendung finden kann, wobei die Arbeitsweise beide Male in der gleichen Weise erfolgt.

Das erfindungsgemäße Rückschlag-Drosselventil kann dabei als gesonderte Komponente, die an beliebiger Stelle in die Strömungsmittelleitung eingebaut werden kann, oder als integrierte Funktionseinheit in einen Pumpenflansch bzw. ein Pumpenanschlußstück eingebaut ausgebildet sein.

Ein Ausführungsbeispiel des erfindungsgemäßen Rückschlag-Drosselventils ist in den anliegenden Zeichungen dargestellt und wird im folgenden näher beschrieben.

In den Zeichnungen zeigt:
- Fig. 1: Das erfindungsgemäße Rückschlag-Drosselventil im Längsschnitt in Durchgangsstellung,
- Fig. 2: das Rückschlag-Drosselventil nach Fig. 1 in Drosselstellung, und
- Fig. 3: in Form eines schematischen Schaltbilds ein Anwendungsbeispiel des Rückschlag-Drosselventils bei einer zu einer Sprüheinrichtung fördernden Flüssigkeitsdosierpumpe.

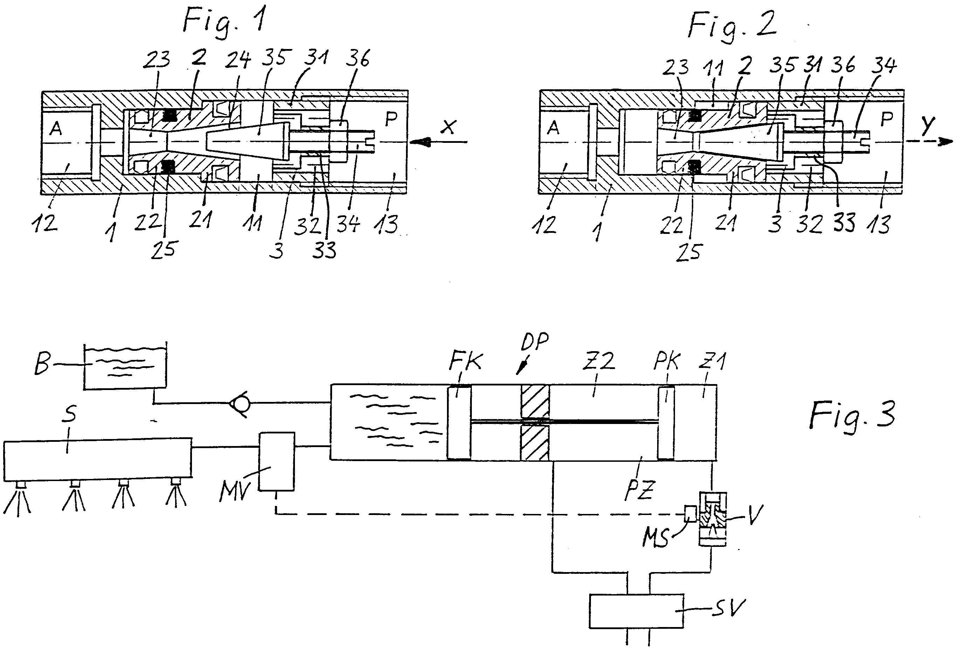

Wie aus den Figuren 1 und 2 ersichtlich ist, besteht das zeitverzögert ansprechende Rückschlag-Drosselventil aus einem Gehäuse 1 mit einer darin gebildeten Ventilkammer 11, weiter mit einem in der Ventilkammer 11 um eine gewisse Axialdistanz verschiebbaren Differentialkolben 2 als beweglichem Ventilelement sowie einem damit zusammenwirkende, feststehend eingebauten festen Ventilelement 3. Beim dargestellten Ausführungsbeispiel ist das Gehäuse 1 rohrförmig, beispielsweise aus Sechskantstabmaterial gefertigt, und weist an seinen beiderseitigen Enden schraubbare Leitungsanschlüsse 12 und 13 auf.

Das feste Ventilelement 3 besteht aus einem in das Gehäuse 1 eingeschraubten Einsatz 31 mit axialen Durchgangsbohrungen 32 und einer mittigen Nabe 33 mit mittiger Gewindeöffnung, in welche der Gewindeschaft 34 eines kegeligen Drosselkörpers 35 eingeschraubt und mit einer Kontermutter 36 gesichert ist.

Der als bewegliches Ventilelement dienende Differentialkolben 2 ist als Stufenkolben mit einem hinteren, dem festen Ventilelement 3 zugewandten Abschnitt 21 größeren Durchmessers und einem vorderen Abschnitt 22 kleineren Durchmessers ausgebildet; die Gehäusewand im Bereich der Ventilkammer 11 ist, wie ersichtlich, entsprechend ausgebildet, und die beiden Kolbenabschnitte 21 und 22 wirken jeweils mit den zugehörigen Gehäusewandbereichen über Dichtungen dichtend zusammen. Die, wie ersichtlich konvergent-divergente mittige Durchgangsbohrung 23 des Differentialkolbens 2 hat in ihrem hinteren Teil eine zu denn kegelförmigen Drosselkörper 35 komplementäre Kegelform. Zwischen dem hinteren Abschnitt der Differentialkolbenbohrung 23 und dem kegelförmigen Drosselkörper 35 ist also ein kegeliger Ringspalt 24 gebildet, der in der Durchgangsstellung (Fig. 1) verhältnismäßig groß, in der Drosselstellung (Fig. 2) aber verhältnismäßig eng ist. Die Größe dieses Ringspalts 24 ist durch axiales Verstellen des kegeiigen Drosselkörpers 35 durch Drehen des an seinem hinteren Ende mit einem Schraubenzieherschlitz versehenen Gewindeschafts 34 einstellbar.

Die Strömungsrichtung des Mediums durch das Rückschlag-Drosselventil in Durchgangsrichtung ist in Fig. 1 mit dem durchgezogenen Pfeil X dargestellt. Die gedrosselte Rückströmung in Gegenrichtung ist in Fig. 2 mit dem gestrichelten Pfeil Y dargestellt.

Wie man aus Fig. 1 leicht nachvollziehen kann, wird bei Strömungsrichtung des Mediums in Richtung X der Differentialkolben 2 unverzögert in Strömungsrichtung, also in der Zeichnung nach links, in die Durchgangsstellung vorgeschoben, da das strömende Medium in Strömungsrichtung auf die große Stirnfläche des Differentialkolbens an dessen Abschnitt 21 wirkt.

Im statischen Zustand des strömenden Mediums, also während der Umsteuerphase der Strömungsrichtung des Mediums in einem entsprechenden Steuerventil, bleibt der Differentialkolben 2 auch in seiten Durchgangsstellung gedrängt, weil die Stirnfläche des Kolbenabschnitts 21 größer als die Stirnfläche des Kolbenabschnitts 22 ist und deshalb auch bei an beiden Kolbenstirnflächen gleichen Druckverhältnissen eine den Differentialkolben 2 in Richtung seiner Durchgangsstellung vorspannende Nettokraft resultiert.

Erfolgt nun die Strömung in Gegenrichtung, nämlich in Richtung Y, bleibt der Differentialkolben 2 zunächst in der Durchgangsstellung stehen, bis sich vor der Kolbenstirnseite an dessen Abschnitt 23 ein entsprechender Staudruck aufgebaut hat, der um soviel größer als der Druck an der Stirnfläche des Kolbenabschnitts 21 ist, daß am Differentialkolben 2 nun eine Nettokraft in Richtung seiner Drosselstellung wirkt und den Differentialkolben 2 in seine Drosselstellung verschiebt. Da der in der Durchgangsstellung des Ventils noch relativ große Ringspalt 24 nur eine schwache Drosselung der Strömung erzeugt, erfolgt der Aufbau des zum Verschieben des Differentialkolbens 2 in Drosselstellung notwendigen Staudrucks an der Stirnfläche des Kolbenabschnitts 22 mit einer gewissen Zeitverzögerung, und folglich erfolgt auch die Kolbenverschiebung und das Erreichen der Drosselstellung mit einer gewissen Zeitverzögerung. In der Drosselstellung verstärkt sich der Staudruck an der Stirnfläche des Kolbenabschnitts 22 wegen des nun verengten Ringspalts 24, so daß das Ventil stabil in der Drosselstellung verbleibt, bis erneut eine Strömungsrichtungsumkehr erfolgt und das Medium wieder in der Durchgangsrichtung X strömt, wo dann die Umschaltung des Ventils in die Durchgangsstellung ohne jeder Verzögerung erfolgt.

Fig. 3 zeigt als Anwendungsbeispiel eine Flüssigkeitsdosierpumpe DP mit einem Flüssigkeitskolben FK und einem damit tandemartig angeordneten Pneumatikkolben PK, der in einem Pneumatikzylinder PZ mit zwei Zylinderkammern Z1 und Z2 verschiebbar ist. Die Dosierpumpe DP saugt beim Ansaughub Flüssigkeit aus einem Behälter B an und fördert sie im Ausstoßhub zu einer Sprüheinrichtung S. Das erfindungsgemäße Drosselrückschlagventil ist in die zur Zylinderkammer Z1 Führende Druckluftleitung geschaltet. Zum Umsteuern des Pneumatikkolbens PK dient ein mit den beiden Pneumatikleitungen zu den Zylinderabschnitten Z1 und Z2 verbundenes Steuerventil SV. Wie man also sieht, erfolgt die Beaufschlagung der Zylinderkammer Z1 ungedrosselt, das Ausstoßen der Luft aus der Zylinderkammer Z1 bei der Beaufschlagung der Zylinderkammer Z2 aber gedrosselt.

Vorzugsweise ist in die Ausstoßleitung zur Sprüheinrichtung S statt eines einfachen Rückschlagventils eine steuerbares Absperrventil, beispielsweise ein Magnetventil MV eingeschaltet, das mit einer kurzen Zeitverzügerung nach dem Umsteuern der Dossierpumpe von Ausstoßhub auf Ansaughub schließt. Die Steuerung des Magnetventils MV kann dabei durch die Bewegung des Differentialkolbens 2 erfolgen, der dazu mit einem eingebauten Magnetring 25 versehen ist, der mit einem externen Magnetsensor MS zusammenwirkt. Dadurch ist das Verschieben des Differentialkolbens 2 aus der Durchgangsstellung in die Drosselstellung abfühlbar und in Abhängigkeit dessen das Magnetventil MV im Sinne des Schließens ansteuerbar, und ebenso ist die Verschiebung des Differentialkolbens aus der Drosselstellung in die Durchgangsstellung abfühlbar und in Abhängigkeit davon das Magnetventil MV im Sinne seiner Öffnung ansteuerbar.

## Patentansprüche

1. Zeitverzögert ansprechendes Rückschlag-Drosselventil, das in einem Ventilgehäuse (1) eine im Durchmesser abgestufte Bohrung (11) aufweist, die mit ihren beiden Enden (12, 13) an Strömungsleitungen anschließbar ist, weiter ein in dem im Durchmesser größeren Abschnitt der Bohrung (11) eingebautes feststehendes Ventilelement (3) aufweist, und einen in der abgestuften Bohrung (11) um eine gewisse Axialdistanz verschiebbaren abgestuften Differentialkolben (2) mit einem im Durchmesser größeren Abschnitt (21) und einem im Durchmesser kleineren Abschnitt (22), der eine Strömungsdurchlaßbohrung (23) aufweist und mit dem Feststehenden Ventilelement (3) derart zusammenwirkt, daß der Differentialkolben in seiner vom festen Ventilelement (3) entfernten Axialposition entsprechend der Durchgangsstellung des Ventils zwischen sich und einem Teil (35) des festen Ventilelements (3) eine größere Strömungsdurchlaßöffnung und in seiner dem festen Ventilelement (3) nahen Axialposition entsprechend der Drosselstellung des Ventils zwischen sich und denn betreffenden Teil (35) des Festen Ventilelements eine kleinere Strömungsdurchlaßöffnung bildet.

2. Ventil nach Anspruch 1, dadurch gekennzeichnet, daß das feststehende Ventilelement (3) einen scheibenartigen Körper (31) mit mindestens einer axialen Strömungsdurchtrittsöffnung (32) und einem ringförmigen äußeren, als Begrenzungsanschlag für die Axialbewegung des Differentialkolbens (2) dienenden Bereich und ein mittiges, zum Differentialkolben (2) hin vorspringendes kegeliges Teil (35) aufweist, das mit einem komplementär kegeligen Abschnitt der Differentialkolbenbohrung (23) einen in der Durchgangsstellung weiteren und in der Drosselstellung engeren Ringspalt (24) bildet.

3. Ventil nach Anspruch 2, dadurch gekennzeichnet, daß das kegelige Teil (35) mit einem rückwärtigen Gewindeschaft (34) in eine Gewindebohrung des scheibenartigen Körpers (31) eingeschraubt und durch Drehen des Gewindeschafts (34) in seiner Axialposition relativ zu dem scheibenartigen Körper (31) verstellbar ist.

4. Ventil nach einem der Ansprüche 1 bis 3, dadurch gekennzeichnet, daß der Differentialkolben (2) einen magnetischen Teil (25) aufweist.

5. Ventil nach Anspruch 4, dadurch gekennzeichnet, daß der magnetische Teil durch einen in eine Umfangsnut eingesetzten Magnetring (25) gebildet ist.

6. Sprühanlage, bestehend aus einem Sprühkopf (S), einer Flüssigkeitskolbenpumpe (DP), die während eines Ansaughubs Flüssigkeit aus einer Flüssigkeitsquelle (B) ansaugt und während eines Ausstoßhubs Flüssigkeit zum Sprühkopf fördert, und mit einem den Pumpenkolben (FK) der Flüssigkeitspumpe antreibenden doppeltwirkenden Pneumatikkolben (PK), dadurch gekennzeichnet, daß in die zur Beaufschlagung des Pneumatikkolbens in Ausstoßhubrichtung dienenden Zylinderabschnitt (Z1) führende Leitung ein zeitverzögert ansprechendes Rückschlag-Drosselventil nach einem der Ansprüche 1 bis 5 mit zum Zylinderabschnitt (Z1) weisender Durchgangsrichtung und entgegengesetzt weisender Drosselrichtung eingebaut ist.

7. Sprühanlage nach Anspruch 6, dadurch gekennzeichnet, daß in die Flüssigkeitsleitung von der Flüssigkeitspumpe (DP) zum Sprühkopf (S) ein Magnetventil (MV) eingebaut ist und das Rückschlag-Drosselventil ein solches nach Anspruch 4 oder 5 in Verbindung mit einem extern am Ventilgehäuse (1) angeordneten Magnetsensor (MS) ist und daß der die Bewegung des Differentialkolbens (2) abfühlende Magnetsensor in Abhängigkeit von der Differentialkolbenbewegung das Magnetventil (MV) steuert.
